# FASCICULE DE BREVET EUROPEEN

(11) **EP 1 714 596 B1**
(45) Date de publication et mention de la délivrance du brevet: **22.08.2007**
(21) Numéro de dépôt: 05103178.9
(22) Date de dépôt: 20.04.2005
(51) Int. Cl.: A47J 47/01, G01F 11/18

(54) **Dispositif de distribution d'une matière en poudre, en particulier de boissons liophilisées**
Vorrichtung zur Ausgabe von pulverförmigem Material
Dispensing apparatus for powder material

(43) Date de publication de la demande: 25.10.2006
(73) Titulaire: Fountain SA, 1420 Braine-l'Alleud (BE)
(72) Inventeur: Vandebos, Alain, 1860, Meise (BE)
(74) Mandataire: Gevers, François

(56) Documents cités:
- EP-A- 1 232 713
- US-A- 3 393 838

## Description

La présente invention se rapporte à une unité de base pour un dispositif de distribution de matière particulaire, en particulier de boisson lyophilisée comprenant:
- un premier élément qui comprend au moins une première plaque de base substantiellement horizontale et une première et une deuxième paroi latérale, substantiellement perpendiculaires à ladite première plaque de base, et
- un premier moyen de fixation,
   ledit premier élément est prévu pour recevoir un socle sur ladite première plaque de base, socle qui est prévu pour loger un récipient d'approvisionnement de matière particulaire et qui est muni d'un tiroir d'ouverture, ledit tiroir d'ouverture comprenant une position ouverte et une position fermée et en outre un deuxième moyen de fixation réciproque audit premier moyen de fixation, ledit tiroir étant prévu pour une libération d'une quantité de matière particulaire provenant dudit récipient lorsqu'il est en position ouverte.

La présente invention se rapporte en outre à un dispositif de distribution de matière particulaire, en particulier de boisson lyophilisée comprenant l'unité de base susdite.

Une telle unité de base et un tel dispositif de distribution sont connus par exemple du document US 3 393 838 qui décrit un dispositif de distribution comprenant une unité de base dans laquelle un récipient d'approvisionnement vient se loger, muni de son socle à tiroir. Le tiroir dudit socle présente aussi une position ouverte et une position fermée.

L'unité de base du brevet US 3 393 838 comprend en outre un tiroir coulissant qui comprend un moyen de fixation permettant de fixer le tiroir du socle de la cartouche. Dès lors, lorsque l'utilisateur tire sur le tiroir de l'unité de base, il ouvre aussi le tiroir de la cartouche puisque le tiroir de la cartouche et le tiroir de l'unité de base sont fixés ensemble. Dans le document US 3 393 838, c'est le tiroir qui est mobile et la cartouche de produit reste immobile dans l'unité de base.

Malheureusement, cette unité de base n'est pas très commode à l'utilisation et présente l'inconvénient que le produit particulaire s'agglomère dans le récipient d'approvisionnement. En effet tout d'abord, un mouvement de traction n'est jamais un mouvement naturel aisé pour un utilisateur et ensuite le produit particulaire qui est en général prévu pour être rapidement dissous dans l'eau s'agglomère au contact de l'atmosphère stagnante qui règne dans le récipient et sous l'effet de son propre poids.

L'invention a pour but de pallier les inconvénients de l'état de la technique en procurant une unité de base plus simple d'utilisation, dans laquelle l'utilisateur va se servir de matière particulaire par un mouvement plus naturel et beaucoup plus aisé, tout en résolvant le problème de l'agglomération de la matière particulaire.

Pour résoudre ce problème, il est prévu suivant l'invention une unité de base telle qu'indiquée au début dans laquelle le premier moyen de fixation est situé à l'avant de la première plaque de base.

En effet, lorsque le premier moyen de fixation est situé directement sur ladite plaque de base, le tiroir est fixé au premier élément et reste toujours au même endroit, qu'il soit en position ouverte ou en position fermée. C'est le récipient d'approvisionnement qui recule par rapport au tiroir par la pression exercée par l'utilisateur qui veut se servir en matière particulaire.

Le premier moyen de fixation peut aussi se trouver sur une paroi frontale s'étendant à l'avant de l'unité de base, substantiellement verticalement par rapport à ladite plaque de base. L'effet obtenu sera exactement le même.

Le premier moyen de fixation et le deuxième moyen de fixation peuvent par exemple être choisis parmi les moyens de fixation constitués d'au moins un orifice et d'au moins une protubérance prévue pour être logée dans l'orifice, ou bien d'au moins une encoche et d'au moins une protubérance prévue pour être logée dans l'encoche.

Comme on l'a déjà mentionné ci-dessus, le tiroir atteint sa position ouverte lorsque l'utilisateur pousse sur le récipient d'approvisionnement (cartouche de matière particulaire). Etant donné que le tiroir est fixé à l'unité de base, c'est le mouvement de recul du récipient d'approvisionnement imposé par l'utilisateur qui va commander l'ouverture du tiroir. Il est clair que le fait de pousser sur le récipient d'approvisionnement est un geste plus simple et plus naturel, même plus ergonomique pour l'utilisateur. Le fait que le tiroir reste toujours au même endroit, permet aussi à l'utilisateur de mieux viser à quel endroit la matière particulaire va être distribuée et de mieux ajuster le récipient qu'il va placer par exemple en dessous de l'ouverture pour récupérer cette matière. Dans le cas d'un distributeur de boisson lyophilisée, l'utilisateur pourra mieux ajuster sa tasse ou son verre, ce qui aura pour résultat une utilisation du dispositif plus propre. De plus, le mouvement de recul de la cartouche permet une agitation de la matière particulaire et limite fortement son agrégation. L'atmosphère régnante n'est plus une atmosphère stagnante et le produit subissant une agitation à chaque utilisation ne s'agglomère plus non plus sous l'effet de son propre poids.

Dans une forme de réalisation particulièrement avantageuse, l'unité de base comprend en outre un deuxième élément, ledit deuxième élément étant prévu pour être logé dans le premier élément et pour y loger le récipient d'approvisionnement de matière particulaire avec son socle, ledit deuxième élément comprenant au moins :
- une deuxième plaque de base substantiellement horizontale
- une deuxième paroi arrière,
- une troisième et une quatrième paroi latérale, substantiellement perpendiculaires à ladite deuxième plaque de base,
   ledit premier élément et ledit deuxième élément étant prévus pour être mobiles l'un par rapport à l'autre.

Par deuxième paroi arrière on entend soit une surface relativement plane, soit un cylindre de type tige ou encore tout moyen analogue, reliant les troisième et quatrième parois latérales. On préfèrera une surface substantiellement plane comme paroi arrière, celle-ci peut être de n'importe quelle taille. En effet, une surface plane permet entre autres un meilleur maintien des parois latérales en place et de la cartouche.

Lors de la poussée exercée par l'utilisateur, le récipient d'approvisionnement, ceinturé de cette manière par le deuxième élément ne se déséquilibre pas, le poids du récipient est légèrement augmenté par la présence de ce deuxième élément qui joue le rôle de gaine, ce qui améliore sa stabilité lors du mouvement imposé. Lors de la poussée susmentionnée, c'est le deuxième élément qui subit le mouvement de recul. Comme il ceinture le récipient d'approvisionnement et son socle, il impose le mouvement de recul au récipient d'approvisionnement, tandis que le tiroir est solidaire du premier élément qui lui est fixe.

Dans une forme de réalisation, le premier élément comprend au moins un premier moyen de translation et ledit deuxième élément comprend au moins un deuxième moyen de translation, réciproque au premier moyen de translation susdit.

On pourrait citer comme moyens de translation une gouttière (premier moyen de translation) de guidage de la deuxième plaque de base du deuxième élément, ou bien des rails de guidage (premier élément de translation) permettant de guider des protubérances (deuxième moyen de translation) situées soit sur les parois latérales soit sur la plaque de base du deuxième élément ou l'inverse ou encore toute alternative analogue permettant de guider la translation du deuxième élément au sein du premier élément.

De par la présence de moyen de guidage pour la translation, le mouvement est plus reproductible, ce qui diminue l'usure de l'unité de base et ce qui simplifie encore l'utilisation de l'unité de base. En effet, avec un mouvement guidé, la poussée exercée par l'utilisateur est diminuée et l'utilisation est simplifiée.

Dans une variante, le premier élément comprend au moins un premier moyen de pivot et ledit deuxième élément comprend au moins un deuxième moyen de pivot, réciproque au premier moyen de pivot susdit.

Dans cette variante particulièrement avantageuse, le mouvement imposé par l'utilisateur est un mouvement de rotation qui a pour effet d'assurer une meilleure agitation du produit dans la cartouche et limite encore plus l'agrégation de ce dernier. De plus le mouvement est encore plus propice à la pénétration du produit dans l'ouverture du tiroir et le mouvement de rotation de retour, qui ramène le récipient et le tiroir en position fermée a un effet racloir qui diminue le coincement du produit entre le socle et le tiroir.

Par moyens de pivot, on entend par exemple une protubérance et un orifice, l'orifice pouvant se situer soit sur une, soit sur les deux parois latérales du premier élément, soit encore sur une, soit sur les deux parois latérales du deuxième élément, les protubérances se situant dès lors respectivement soit sur une, soit sur les deux parois latérales du deuxième élément, soit encore sur une, soit sur les deux parois latérales du premier élément. Il est bien entendu que tout moyen de pivot analogue peut aussi être utilisé, on peut par exemple envisager une rainure courbe qui guiderait une protubérance dans un mouvement de rotation, ou même une rainure comprenant un premier tronçon rectiligne incliné ou horizontal et une butée agencée pour guider une protubérance quelconque, ce qui aurait pour résultat un mouvement de translation incliné ou non, de recul et ensuite un mouvement de rotation lors de l'entrée en contact de la protubérance avec la butée.

Avantageusement, la paroi arrière comprend des moyens de guidage agencés pour guider des brides prévues sur des bords latéraux du socle du récipient d'approvisionnement.

La présence de moyens de guidage, par exemple une rainure ou un rail de guidage, agencés pour recevoir les brides dudit socle permettent une introduction de la cartouche dans le deuxième élément plus aisée. Le guidage rend le mouvement d'introduction de la cartouche munie de son socle plus précis.

Dans une variante, à mettre par exemple en relation avec la variante susdite, le premier élément comprend une première paroi arrière qui comprend une première partie basse et une deuxième partie haute qui est courbe et la deuxième paroi arrière comprend une troisième partie basse et une quatrième partie haute qui est courbe, la quatrième partie haute présentant une courbure analogue à celle de la deuxième partie courbe du premier élément.

La courbure de la paroi arrière permet une introduction encore plus aisée de la cartouche. Le mouvement d'introduction de la cartouche par l'utilisateur est le suivant. L'utilisateur a la cartouche en main de manière inclinée, il la positionne contre la face arrière du deuxième élément, et la glisse contre cette paroi arrière, jusqu'à rencontrer la partie substantiellement verticale, à ce moment, naturellement, il redresse la cartouche et elle entre exactement dans la cavité sensée la loger, avec la position qu'elle doit avoir.

Si on se trouve dans la forme de réalisation comprenant des moyens de guidage pour des brides situées au niveau du socle, l'introduction de la cartouche sera encore plus aisée.

Dans une variante encore, on pourrait envisager que les première et deuxième parois arrières soient inclinée au lieu de courbées.

De préférence, la deuxième paroi arrière du deuxième élément comprend au moins une rangée d'ouvertures, chaque ouverture étant prévue pour recevoir une cale.

La cale permet de limiter le mouvement du deuxième élément au sein du premier élément et dès lors ceci a pour résultat de limiter l'ouverture mutuelle du tiroir-cartouche pour limiter la quantité de produit particulaire qui est distribué lors du mouvement de rotation.

Il faut évidemment envisager que la rangée d'ouverture pourrait se trouver sur la première paroi arrière ou encore sur la première plaque de base selon les formes de réalisation adoptées (mouvement de translation ou de rotation).

La cale peut avoir une forme de U, de L, de I ou de croissant de lune ou encore toute forme analogue, de préférence la cale a une forme de L. La forme en L permet de placer deux rangées d'ouvertures en quinconce sans qu'une deuxième extrémité de la cale n'empêche l'introduction de la première extrémité de la cale dans l'orifice. De plus le L limite la pénétration de la cale dans l'orifice et permet une meilleure prise à l'utilisateur.

Dans une forme de réalisation particulièrement préférentielle de l'unité de base selon l'invention, des moyens de fixation à un support sont prévus.

D'autres formes de réalisation de l'unité de base suivant l'invention sont indiquées dans les revendications annexées.

L'invention a aussi pour objet un dispositif de distribution de matière particulaire, en particulier de boisson lyophilisée comprenant l'unité de base susdite.

D'autres formes de réalisation du dispositif suivant l'invention sont indiquées dans les revendications annexées.

D'autres caractéristiques, détails et avantages de l'invention ressortiront de la description donnée ci-après, à titre non limitatif et en faisant référence aux dessins annexés.

La figure 1 est une vue latérale en coupe du premier élément de l'unité de base selon l'invention.

La figure 2 est une vue en perspective illustrant le deuxième élément selon l'invention, dans laquelle on peut apercevoir la rangée d'orifices permettant de bloquer le mouvement relatif des deux éléments interne et externe l'un par rapport à l'autre.

La figure 3 est une vue en perspective de l'unité de base comprenant le premier élément et le deuxième élément dans la forme de réalisation particulière où le mouvement relatif des deux éléments interne et externe l'un par rapport à l'autre est un mouvement de rotation.

La figure 4 est une vue schématique illustrant l'introduction du récipient d'approvisionnement dans le deuxième élément de l'unité de base selon l'invention.

La figure 5 est une vue en perspective illustrant le dispositif de distribution de matière particulaire selon l'invention, dans son application particulière en tant que dispositif de distribution de boisson lyophilisée.

Sur les figures, les éléments identiques ou analogues portent les mêmes références.

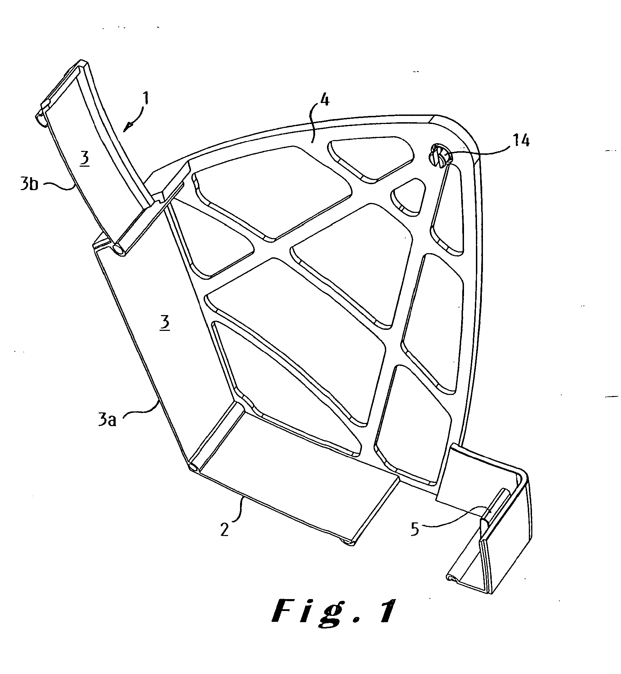

Comme on peut le voir à la figure 1, qui représente une vue en perspective d'une moitié du premier élément 1, le premier élément 1 comprend une première plaque de base 2.

Le premier élément 1 comprend en outre une première paroi arrière 3 qui s'étend substantiellement verticalement. La première paroi arrière 3 comprend une première partie basse 3a et une deuxième partie haute 3b, la première partie basse au moins est perpendiculaire à la première plaque de base 2. En outre, le premier élément 1 comprend une première et une deuxième paroi latérale 4. Ces parois latérales 4 sont à la fois substantiellement perpendiculaires à la première partie basse 3a et à la première plaque de base 2. A l'avant de la première plaque de base 2 se trouve un premier moyen de fixation 5.

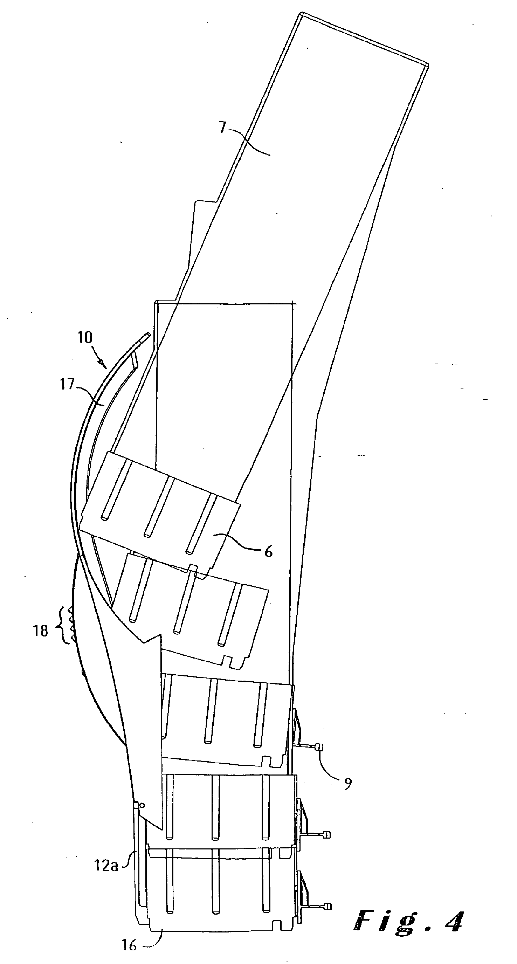

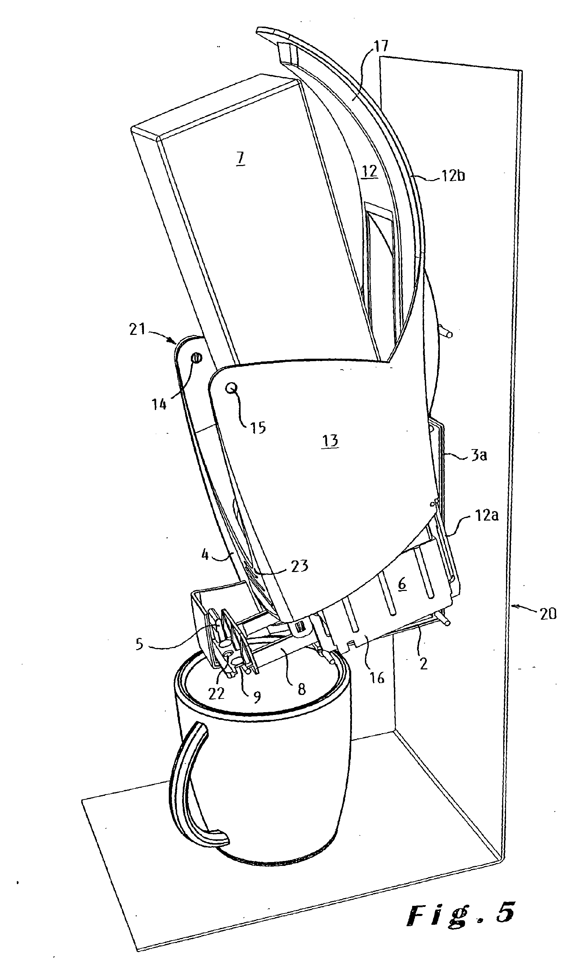

La première plaque de base est positionnée de manière relativement horizontale afin que l'on puisse faire reposer un récipient d'approvisionnement 7 de matière particulaire sur cette dernière (voir aussi les figures 4 et 5).

La première plaque de base 2 sert en réalité de surface d'appui ou de soutien pour le récipient 7 susdit éventuellement muni de son socle 6, que l'on appellera aussi parfois la cartouche 7 munie de son socle 6.

Le premier élément 1 comprend également au moins un premier moyen de pivot 14 qui peut être un orifice dans lequel une protubérance va venir se loger ou une protubérance prévue pour se loger dans un orifice. Dans la forme de réalisation illustrée, l'élément externe comprend un moyen de pivot qui est une protubérance 14, cette protubérance 14 est située sur la partie supérieure interne de chaque face latérale 4, mais on pourrait envisager que cette protubérance 14 ou éventuellement l'orifice soient situés n'importe où sur le premier élément 1, voire sur une seule paroi latérale 4.

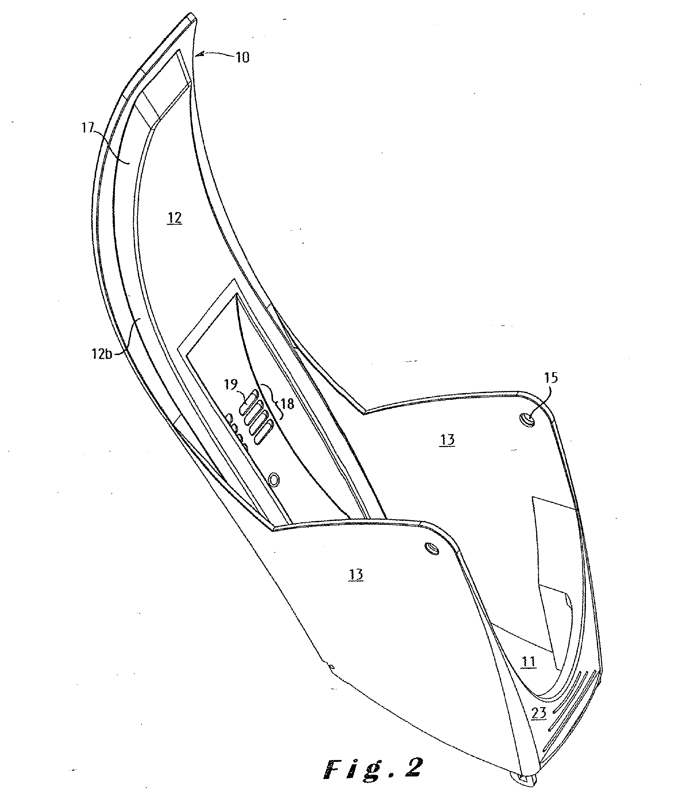

A la figure 2, on peut voir une illustration du deuxième élément 10. Ce deuxième élément 10 est prévu pour être placé dans le premier élément 1. Il comprend au moins une deuxième plaque de base 11. La deuxième plaque de base 11 est substantiellement horizontale. Elle est prévue pour soutenir l'éventuelle cartouche de matière particulaire 7 munie de son socle 6 et elle présente une surface légèrement supérieure à la surface de la base du socle 6.

Le deuxième élément 10 comprend en outre une deuxième paroi arrière 12 qui s'étend substantiellement verticalement. La deuxième paroi 12 comprend une troisième partie basse 12a et une quatrième partie 12b haute. La troisième partie basse 12a est au moins substantiellement perpendiculaire à la deuxième plaque de base 11.

Le deuxième élément 10 comprend également une troisième et une quatrième paroi latérale 13. Ces deux parois latérales 13 sont à la fois substantiellement perpendiculaires à la troisième partie basse 12a et à la deuxième plaque de base 11.

En outre, le deuxième élément comprend dans la forme de réalisation un moyen pivot 15 qui est réciproque au premier moyen de pivot 14. Le moyen de pivot 15 dans la forme de réalisation préférentielle illustrée est un orifice 15 prévu pour accueillir la protubérance 14. Comme on l'a mentionné plus haut, il va de soi que le moyen de pivot 14 pourrait être un orifice et que le moyen de pivot 15 pourrait être une protubérance, que ces moyens de pivots réciproques peuvent être situés n'importe où sur le premier élément et sur le deuxième élément et qu'ils peuvent être au nombre de 1 ou 2.

De plus, à la figure 2, on peut voir que la deuxième paroi arrière comprend, dans cette forme de réalisation deux rangées d'ouvertures 18 qui comprennent chacune des orifices 19 qui sont prévus pour recevoir une cale et un moyen de guidage 17. Le moyen de guidage 17 est avantageusement un rail en relief, mais l'homme de métier envisagera des alternatives sans aucun effort comme par exemple un couple de gorges, de rainures creuses, de rails en relief, une seule gorge ou rainure ou tout autre moyen de guidage analogue.

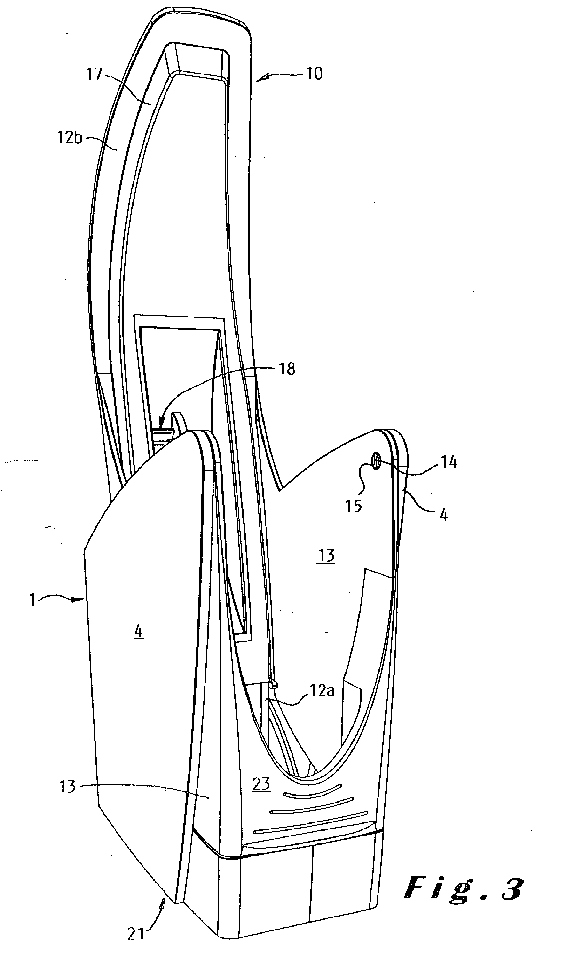

La figure 3 illustre l'unité de base 21 selon l'invention à l'état monté. Le deuxième élément 10 est logé dans l'élément externe 1. Comme on peut le voir, cette forme de réalisation est la forme de réalisation dans laquelle la deuxième partie haute 3b et la quatrième partie haute 12b sont des parties courbes qui présentent chacune l'une l'autres des courbures analogues pour permettre que le deuxième élément 10 puisse être logé dans le premier élément 1. Avantageusement, le deuxième élément comprend aussi une face frontale 23 équipée éventuellement d'un rainurage.

La figure 4 illustre de profil les étapes d'introduction du récipient d'approvisionnement 7 muni de son socle 6 dans le deuxième élément 10 de l'unité de base 21 selon l'invention. Afin de simplifier la compréhension, le premier élément a été enlevé de la représentation.

Dans cette forme de réalisation particulière, comme on l'a montré à la figure 3, la deuxième paroi arrière 12 comprend des moyens de guidage 17. Le socle 6 de la cartouche 7 comprend au moins deux bords latéraux qui comprennent chacun des brides 16. Par les termes brides, on entend par exemple des prolongements latéraux qui s'étendent plus bas que le fond du socle 6 et qui définissent de cette manière des saillies de part et d'autre du fond du socle 6. Dans cette forme de réalisation, les brides 16 sont prévues pour glisser de part et d'autre du rail en relief 17 de la deuxième paroi arrière 12. Une variante consisterait à remplacer les brides par des gorges. Dans ce cas, le rail en relief 17 serait remplacé par des rainures en relief qui s'engageraient dans les gorges précitées. On pourrait aussi envisager que les saillies soient plus longues et qu'elles soient prévues pour s'engager chacune dans un rail situé sur la deuxième paroi arrière du deuxième élément. En réalité, bien des dispositifs d'engagement (élément guidé, moyen de guidage) peuvent être appliqués pour remplacer le rail en relief 17 et les brides 16, il est clair que tous ces dispositifs d'engagement sont compris dans la portée de l'invention.

Comme illustré à la figure 4, l'utilisateur n'a qu'à placer la cartouche 7 munie de son socle 6 à proximité du haut du rail en relief 17. Il ajuste ensuite les brides 16 de part et d'autre du rail en relief 17 en question et la cartouche 7 de matière particulaire est guidée vers le bas grâce à la forme particulière du rail 17 et des parois arrières 3, 12; de la gravité et du geste de l'utilisateur. Le geste de ce dernier est en fait un geste fluide tout à fait naturel, il suffit de soutenir la cartouche 7 et lors de sa descente de la relever légèrement à la verticale.

La figure 5 illustre l'unité de base 21 fixée par des moyens de fixation sur un dispositif de distribution de boisson lyophilisée 20 dans lequel la cartouche 7 ou récipient d'approvisionnement 7 de matière particulaire est placé. Sur cette figure, on a volontairement enlevé la moitié gauche du premier élément 1 afin de mieux illustrer le fonctionnement de l'intérieur.

Dans cette forme de réalisation, la cartouche 7 repose sur la deuxième plaque de base 11.

Le socle 6 de la cartouche 7 comprend un tiroir d'ouverture 8. Le tiroir d'ouverture 8 peut être en position ouverte ou en position fermée. Lorsque le tiroir est en position ouverte, il permet une libération d'une certaine quantité de matière particulaire, c'est la position représentée à cette figure.

Le tiroir 8 est composé de préférence d'un cadre à quatre faces (deux latérales et deux frontales) dont deux (les deux faces latérales) sont agencées de manière substantiellement parallèle aux brides 16 et en retrait par rapport aux brides 16.

La matière particulaire peut être un lyophilisat de café de thé, de soupe ou de tout autre boisson que l'on peut trouver sous une forme lyophilisée à laquelle il faudra encore ajouter de l'eau, mais elle peut être également un savon en poudre, un dentifrice, des épices, du sucre, de la farine ou tout autre matière sous forme de poudre ou de granule qui pourrait trouver une utilité dans un tel distributeur.

Comme on l'a mentionné précédemment (figure 1), à l'avant de la première plaque de base 2 se trouve un premier moyen de fixation 5. Le tiroir comprend quant à lui un deuxième moyen de fixation 9 qui est réciproque au premier moyen de fixation 5. Grâce à ces moyens de fixation 5, 9 réciproques précités, le tiroir est solidaire du premier élément autant en position fermée qu'en position ouverte.

Les moyens de fixation susdits sont choisis parmi les moyens de fixation constitués d'au moins un orifice 22 et d'au moins une protubérance prévue pour être logée dans l'orifice 22 ou d'au moins une encoche 9 et d'au moins une protubérance 5 prévue pour être logée dans l'encoche 9 ou les deux couples précités de moyens de fixation ensemble. Les inverses étant également chaque fois possible.

Lorsque la protubérance 5 est logée dans l'encoche de la face avant du tiroir, celui-ci est fixé à au premier élément 1 de l'unité de base 21 selon l'invention. Pour que le récipient délivre une quantité de matière particulaire, il suffit d'exercer une pression sur la face frontale 22, cette pression a pour effet de faire reculer le récipient d'approvisionnement/cartouche 7, le dispositif est en position de délivrance de produit et une quantité de produit tombe par exemple dans le récipient prévu à cet effet.

Dans la forme de réalisation décrite à la figure 5, la pression par l'utilisateur engendre une légère rotation de la cartouche par la présence des moyens de pivot 14 et 15, le bas de la cartouche recule, la face avant du tiroir étant fixe, le dispositif est en position de délivrance de produit et une quantité de produit tombe par exemple dans le récipient prévu à cet effet.

On peut aussi envisager que le premier élément interne ne présente pas de face frontale, dans le cas l'utilisateur exerce directement une pression sur la cartouche, et l'effet obtenu décrit juste ci-dessus est le même.

Si l'on reprend la forme de réalisation la plus simple (figure 1), on place le récipient d'approvisionnement dans le premier élément 1, dans ce cas, la cartouche repose directement sur la première plaque de base 2. L'utilisateur exerce une pression directement sur la cartouche, celle-ci recule avec un mouvement de translation vers l'arrière, comme la face avant du tiroir d'approvisionnement est solidaire du premier élément, le dispositif est en position de délivrance de produit et une quantité de produit tombe par exemple dans le récipient prévu à cet effet. On peut aussi envisager que la première plaque de base comprenne des rainures ou des gorges pour guider soit les brides du socle de la cartouche soit directement le socle de la cartouche, la présence des brides étant préférentielle pour des raisons d'amenuisement de la résistance de frottement.

Dans la forme de réalisation décrite à la figure 5, il est possible de limiter la rotation du deuxième élément 10 dans le premier élément 1 en insérant une cale dans un des orifices 19 des deux rangées d'ouvertures 18. La rangée d'ouverture à la figure 5 est située sur la deuxième paroi arrière 12. Ceci a pour effet de limiter l'angle de rotation possible et dès lors, l'ouverture relative entre la cartouche 7 et le tiroir 8 est aussi limitée. Ceci limite évidemment la quantité de matière particulaire délivrée Dans cette forme de réalisation, la rangée d'ouvertures 18 est particulièrement accessible à l'utilisateur qui peut mieux doser la quantité de matière particulaire qu'il souhaite, et l'insertion de la cale est aisée.

Les rangées d'ouvertures 18 pourraient aussi être situées sur la première paroi arrière 3. Elle conserverait son rôle de limitateur de l'angle de rotation, mais son accessibilité serait diminuée.

La cale en question peut être en forme de croissant de lune, de I, de L ou encore de U ou encore de tout autre forme dont au moins une extrémité peut être insérée facilement dans un des orifices 19.

Dans une variante de la forme de réalisation la plus simple (non illustrée), le deuxième élément 10 est logé dans le premier élément 1, la cartouche 7 repose sur la deuxième plaque de base 11, mais les moyens de pivot 14, 15 sont remplacés par des moyens de translation. Dans ce cas, on peut envisager que la première plaque de base 2 comprend des rainures ou des gorges ou encore une large gorge permettant de guider la deuxième plaque de base 11. Dans ce cas, lorsque l'utilisateur veut se servir du dispositif selon l'invention, il exerce une pression soit sur une paroi frontale du deuxième élément soit directement sur la cartouche, s'il n'y a pas de face frontale sur le deuxième élément. Dans ce cas, la face avant du tiroir étant fixe et solidaire de l'élément externe, la pression exercée par l'utilisateur aura pour résultat un mouvement de translation vers l'arrière du deuxième élément contenant la cartouche, le dispositif est en position de délivrance de produit et une quantité de produit tombe par exemple dans le récipient prévu à cet effet.

Avantageusement, dans la variante décrite juste ci-dessus, la deuxième partie haute 3b est une partie inclinée d'un angle compris entre 91° et 135° dans un repère trigonométrique. La première plaque de base 2 étant positionnée dans ledit repère trigonométrique avec un angle substantiellement nul ou valant 180°, c'est à dire substantiellement horizontale. La quatrième partie haute 12b est alors aussi inclinée d'un angle substantiellement égal à l'angle d'inclinaison de la deuxième partie haute 3b. Cette inclinaison facilite l'insertion de la cartouche.

De plus, on peut prévoir aussi sur la face arrière du deuxième élément dont une partie est inclinée la présence d'un moyen de guidage 17 qui permet de guider les brides 16 éventuelles du socle 6 de la cartouche 7. Ceci facilite encore plus l'introduction de la cartouche 7 dans l'unité de base 21 selon l'invention. En effet, l'utilisateur n'a qu'à placer la cartouche 7 munie de son socle 6 à proximité du haut du rail en relief 17. Il ajuste ensuite les brides 16 de part et d'autre du rail en relief 17 en question et la cartouche 7 de matière particulaire est guidée vers le bas grâce à la forme particulière du rail 17 et des parois arrières 3, 12; de la gravité et du geste de l'utilisateur. Il suffit de soutenir la cartouche 7 et lors de sa descente de la relever légèrement à la verticale à l'endroit de la jointure entre la troisième partie basse 12a et la quatrième partie haute 12b.

Dans la forme de réalisation la plus simple (figure 1), il est possible de limiter la translation de la cartouche 7 dans le premier élément 1 en insérant une cale dans un des orifices 19 des rangées d'ouvertures 18 prévue sur la plaque de base 2 du premier élément. Ceci a pour effet de limiter la distance possible de translation vers l'arrière du socle 6 de la cartouche 7. Dès lors, l'ouverture relative entre la cartouche 7 et le tiroir 8 est aussi limitée tout comme la quantité de matière particulaire délivrée.

Dans la variante de la forme de réalisation la plus simple, il est également possible de limiter la translation du deuxième élément 10 dans le premier élément 1 en insérant une cale dans un des orifices 19 des rangées d'ouvertures 18 qui sont prévues sur la plaque de base 2. Ceci a pour effet de limiter la distance possible de translation vers l'arrière du deuxième élément 10. Dès lors, l'ouverture relative entre la cartouche 7 et le tiroir 8 est aussi limitée tout comme la quantité de matière particulaire délivrée.

Il est bien entendu que la présente invention n'est en aucune façon limitée aux formes de réalisations décrites ci-dessus et que bien des modifications peuvent y être apportées sans sortir du cadre des revendications annexées.

Par exemple, dans la forme de réalisation la plus simple illustrée à la figure 1, la première paroi arrière 3 pourrait aussi présenter le rail de guidage 17 pour faciliter l'insertion de la cartouche 7.

### LISTE DES ELEMENTS

1. Premier élément
2. Première plaque de base du premier élément
3. Première paroi arrière du premier élément
   3a. Première partie basse de la première paroi arrière
   3b. Troisième partie haute de la première paroi arrière
4. Parois latérales du premier élément
5. Premier moyen de fixation
6. Socle du récipient d'approvisionnement (cartouche)
7. Récipient d'approvisionnement (cartouche)
8. Tiroir d'ouverture
9. Deuxième moyen de fixation
10. Deuxième élément
11. Deuxième plaque de base du deuxième élément
12. Deuxième paroi arrière du deuxième élément
   12a. Deuxième partie basse de la deuxième paroi arrière
   12b. Quatrième partie haute de la deuxième paroi arrière
13. Parois latérales du deuxième élément
14. Moyen de pivot du premier élément
15. Moyen de pivot du deuxième élément
16. Brides du socle
17. Moyen de guidage de la deuxième paroi arrière
18. Rangées d'ouvertures
19. orifice
20. dispositif de distribution de matière particulaire
21. Unité de base
22. orifice de fixation
23. face frontale

## Revendications

1. Unité de base pour un dispositif de distribution de matière particulaire, en particulier de boisson lyophilisée comprenant:
- un premier élément (1) qui comprend au moins une première plaque de base (2) substantiellement horizontale et une première et une deuxième paroi latérale (4), substantiellement perpendiculaires à ladite première plaque de base (2), et
- un premier moyen de fixation (5),
ledit premier élément (1) est prévu pour recevoir un socle (6) sur ladite première plaque de base (2), socle (6) qui est prévu pour loger un récipient d'approvisionnement (7) de matière particulaire et qui est muni d'un tiroir d'ouverture (8), ledit tiroir d'ouverture (8) comprenant une position ouverte et une position fermée et en outre un deuxième moyen de fixation (9) réciproque audit premier moyen de fixation (5), ledit tiroir (8) étant prévu pour une libération d'une quantité de matière particulaire provenant dudit récipient (7) lorsqu'il est en position ouverte,
**caractérisée en ce que** le premier moyen de fixation est situé à l'avant de la première plaque de base (2).

2. Unité de base selon la revendication 1, **caractérisée en ce qu**'elle comprend en outre un deuxième élément (10), ledit deuxième élément (10) étant prévu pour être logé dans le premier élément (1) et pour y loger le récipient d'approvisionnement (7) de matière particulaire avec son socle (6), ledit deuxième élément (10) comprenant au moins :
- une deuxième plaque de base (11) substantiellement horizontale
- une deuxième paroi arrière (12),
- une troisième et une quatrième paroi latérale (13), substantiellement perpendiculaires à ladite deuxième plaque de base (11),
ledit premier élément (1) et ledit deuxième élément (10) étant prévus pour être mobiles l'un par rapport à l'autre.

3. Unité de base selon la revendication 2, dans laquelle ledit premier élément (1) comprend au moins un premier moyen de translation et ledit deuxième élément (10) comprend au moins un deuxième moyen de translation, réciproque au premier moyen de translation susdit.

4. Unité de base selon la revendication 2, dans laquelle ledit premier élément (1) comprend au moins un premier moyen de pivot (14) et ledit deuxième élément (10) comprend au moins un deuxième moyen de pivot (15), réciproque au premier moyen de pivot susdit.

5. Unité de base selon l'une quelconque des revendications 2 à 4, dans laquelle la paroi arrière (12) comprend des moyens de guidage (17) agencés pour guider des brides (16) prévues sur des bords latéraux du socle 6 du récipient d'approvisionnement 7.

6. Unité de base selon l'une quelconques des revendications 2 à 5, dans laquelle le premier élément (1) comprend une première paroi arrière (3) qui comprend une première partie basse (3a) et une deuxième partie haute (3b) qui est courbe et dans laquelle ladite deuxième paroi arrière (12) comprend une troisième partie basse (12a) et une quatrième partie haute (12b) qui est courbe, la quatrième partie haute (12b) présentant une courbure analogue à celle de la deuxième partie courbe (3b) dudit premier élément (1).

7. Unité de base selon l'une quelconques des revendications 2 à 6, dans laquelle ladite deuxième paroi arrière (12) dudit deuxième élément (10) comprend au moins une rangée d'ouvertures (18), chaque ouverture (19) étant prévue pour recevoir une cale.

8. Unité de base selon la revendication 7, dans laquelle la cale est en forme de L, de U, de I, de croissant de lune et analogue, de préférence en forme de L.

9. Unité de base selon l'une quelconques des revendications 1 à 8, dans laquelle des moyens de fixation à un support sont prévus.

10. Dispositif de distribution (20) de matière particulaire, en particulier de boisson lyophilisée comprenant l'unité de base (21) suivant
l'une quelconque des revendications 1 à 9.

## Claims

1. Base unit for a device for dispensing particulate material, in particular freeze-dried drink, comprising:
- a first element (1) that comprises at least a first substantially horizontal base plate (2) and first and second lateral walls (4), substantially perpendicular to the said first base plate (2), and
- a first fixing means (5),
the said first element (1) is designed to receive a pedestal (6) on the said first base plate (2), the said pedestal (6) being designed to house a receptacle (7) supplying particulate material that is provided with an opening drawer (8), the said opening drawer (8) comprising an open position and a closed position and in addition a second fixing means (9) reciprocal with the first fixing means (5), the said drawer (8) being designed for releasing a quantity of particulate material coming from the said receptacle (7) when it is in the open position,
**characterised in that** the first fixing means is situated in front of the first base plate (2).

2. Base unit according to claim 1, **characterised in that** it also comprises a second element (10), the said second element (10) being designed to be housed in the first element (1) and to house therein the particulate material supply receptacle (7) with its pedestal (6), the said second element (10) comprising at least:
- a second substantially horizontal base plate (11),
- a second rear wall (12),
- third and four lateral walls (13), substantially perpendicular to the said base plate (11),
the said first element (1) and the said second element (10) being designed to be movable with respect to each other.

3. Base unit according to claim 2, in which the said first element (1) comprises at least a first translation means and the said second element (10) comprises at least a second translation means, reciprocal with the aforesaid first translation means.

4. Base unit according to claim 2, in which the said first element (1) comprises at least a first pivot means (14) and the said second element (10) comprises at least a second pivot means (15), reciprocal with the aforesaid first pivot means.

5. Base unit according to any one of claims 2 to 4, in which the rear wall (12) comprises guidance means (17) arranged to guide flanges (16) provided on lateral edges of the pedestal (6) of the supply receptacle (7).

6. Base unit according to any one of claims 2 to 5, in which the first element (1) comprises a first rear wall (3) that comprises a first bottom part (3a) and a second top part (3b) that is curved and in which the said second rear wall (12) comprises a third bottom part (12a) and a fourth top part (12b) that is curved, the fourth top part (12b) having a curvature similar to that of the second curved part (3b) of the said first element (1).

7. Base unit according to any one of claims 2 to 6, in which the said second rear wall (12) of the said second element (10) comprises at least one row of openings (18), each opening (19) being designed to receive a wedge.

8. Base unit according to claim 7, in which the wedge is in the shape of an L, an U, an I, a crescent moon or similar, preferably in the shape of an L.

9. Base unit according to any one of claims 1 to 8, in which means of fixing to a support are provided.

10. Device (20) for dispensing particulate material, in particular freeze-dried drink, comprising the base unit (21) according to any one of claims 1 to 9.

## Patentansprüche

1. Basiseinheit für eine Vorrichtung zur Austeilung einer bestimmten Materie, insbesondere eines gefriergetrockneten Getränkes, umfassend:
- ein erstes Element (1), das mindestens eine erste Grundplatte (2) umfasst, die im Wesentlichen horizontal ist sowie eine erste und eine zweite Seitenwand (4), die im Wesentlichen zu der ersten Grundplatte (2) senkrecht sind, und
- ein erstes Befestigungsmittel (5),
wobei das erste Element (1) so eingerichtet ist, dass es einen Sockel (6) auf der ersten Grundplatte (2) aufnimmt, wobei der Sockel (6) derart eingerichtet ist, dass er einen Versorgungsbehälter (7) mit einer bestimmten Materie umfasst, welcher mit einem Schubfach zum Öffnen (8) ausgestattet ist,
wobei das Schubfach zum Öffnen (8) eine offene Position und eine geschlossene Position aufweist sowie außerdem ein zweites Befestigungsmittel (9), das zu dem ersten Befestigungsmittel (5) umgekehrt ist, wobei das Schubfach (8) derart eingerichtet ist, dass es eine Menge einer jeweiligen Materie, die aus dem Behälter (7) kommt, freigibt, wenn es sich in der offenen Position befindet,
**dadurch gekennzeichnet, dass** das erste Befestigungsmittel gegenüber der ersten Grundplatte (2) vorgelagert ist.

2. Basiseinheit nach Anspruch 1, **dadurch gekennzeichnet, dass** diese außerdem ein zweites Element (10) umfasst, wobei das zweite Element (10) derart eingerichtet ist, dass es in dem ersten Element (1) aufgenommen werden kann und dort den Versorgungsbehälter (7) mit der jeweiligen Materie mit Hilfe seines Sockels (6) beherbergen kann, wobei das zweite Element (10) mindestens umfasst:
- eine zweite Grundplatte (11), die im Wesentlichen horizontal ist,
- eine zweite Rückwand (12),
- eine dritte und eine vierte Seitenwand (13), die im Wesentlichen senkrecht zu der zweiten Grundplatte (11) sind,
wobei das erste Element (1) und das zweite Element (10) derart eingerichtet sind, dass sie im Verhältnis zueinander beweglich sind.

3. Basiseinheit nach Anspruch 2, in der das erste Element (1) mindestens ein erstes Translationsmittel umfasst und das zweite Element (10) mindestens ein zweites Translationsmittel umfasst, welches zu dem ersten der oben genannten Translationsmittel umgekehrt ist.

4. Basiseinheit nach Anspruch 2, in der das erste Element (1) mindestens ein erstes Zapfenmittel (14) umfasst und das zweite Element (10) mindestens ein zweites Zapfenmittel (15) umfasst, welches zu dem ersten der oben genannten Zapfenmittel umgekehrt ist.

5. Basiseinheit nach einem beliebigen der Ansprüche 2 bis 4, in der die Rückwand (12) Führungsmittel (17) umfasst, die derart angeordnet sind, dass sie Flansche (16) führen, die auf den Seitenrändern des Sockels (6) des Versorgungsbehälters (7) angeordnet sind.

6. Basiseinheit nach einem beliebigen der Ansprüche 2 bis 5, in der das erste Element (1) eine erste Rückwand (3) umfasst, welche einen ersten unteren Abschnitt (3a) sowie einen zweiten oberen Abschnitt (3b) umfasst, der gebogen ist und in der die zweite Rückwand (12) einen dritten unteren Abschnitt (12a) und einen vierten oberen Abschnitt (12b) umfasst, der gebogen ist, wobei der vierte obere Abschnitt (12b) eine Biegung aufweist, die zu derjenigen des gebogenen zweiten Abschnittes (3b) des ersten Elementes (1) analog ist.

7. Basiseinheit nach einem beliebigen der Ansprüche 2 bis 6, in der die zweite Rückwand (12) des zweiten Elementes (10) mindestens eine Reihe von Öffnungen (18) umfasst, wobei jede Öffnung (19) derart eingerichtet ist, dass sie einen Keil aufnehmen kann.

8. Basiseinheit nach Anspruch 7, in der der Keil U-förmig, L-förmig, I-förmig oder die Form einer Mondsichel und dergleichen aufweist und vorzugsweise L-förmig ist.

9. Basiseinheit nach einem beliebigen der Ansprüche 1 bis 8, in welcher Mittel zur Befestigung an einem Träger vorgesehen sind.

10. Vorrichtung zur Austeilung (20) einer bestimmten Materie, insbesondere eines gefriergetrockneten Getränkes, umfassend eine Basiseinheit (21) nach einem beliebigen der Ansprüche 1 bis 9.
